Europäisches Patentamt

European Patent Office

Office européen des brevets

(19)

(11) Publication number: **0 325 478**
**A2**

(12) # EUROPEAN PATENT APPLICATION

(21) Application number: **89300550.4**

(22) Date of filing: **20.01.89**

(51) Int. Cl.⁴: **A 23 L 1/212**
**A 23 L 1/04**

(30) Priority: **22.01.88 JP 13156/88**

(43) Date of publication of application:
**26.07.89 Bulletin 89/30**

(84) Designated Contracting States:
**AT BE CH DE ES FR GB GR IT LI LU NL SE**

(71) Applicant: **Takeda Chemical Industries, Ltd.**
**27, Doshomachi 2-chome Higashi-ku**
**Osaka-shi Osaka, 541 (JP)**

(72) Inventor: **Konno, Akira**
**284, Oaza-takahama Shimamoto-cho**
**Mishima-gun Osaka 618 (JP)**

**Iida, Atsu**
**13-23, Seimeidohri Abeno-ku**
**Osaka 545 (JP)**

(74) Representative: **Lewin, John Harvey et al**
**ELKINGTON AND FIFE Beacon House 113 Kingsway**
**London WC2B 6PP (GB)**

(54) **Shaped foods of fruit or vegetable and production thereof.**

(57) Shaped foods are produced by mixing a curdlan with small pieces of a fruit or vegetable, shaping the mixture and heating the shaped material for binding said small pieces. The thus obtained shaped foods have superior texture and appearance.

EP 0 325 478 A2

Bundesdruckerei Berlin

## Description

### Shaped Foods of Fruit or Vegetable and Production Thereof

This invention relates to shaped foods prepared by mixing a curdlan to small pieces of a fruit or vegetable and shaping the mixture and heating the shaped material.

Recently, the number of people who have meals in the so-called "one dinner and four snacks" manner is increasing. Thus, people who take meals in that manner have a dinner only once a day and, for the rest, have four snacks or light meals at pleasure depending on the extent to which they feel hungry, without sticking to any particular time and/or place as far as circumstances permit. Hand in hand with such tendency, various snack foods have come into the market. Some of them, called sheet foods or film foods, for instance, are very different in shape from the conventional snack foods.

Generally, snack foods should be characterized in that they are fashionable and can be eaten smartly at any time and at any place. Snack foods currently on the market are anyhow reflecting the endeavors made to make them have such characteristic features. As yet, however, few are satisfactory from the quality viewpoint. Thus, in the case of the conventional sheet foods, for instance, some are readily broken on the occasion of eating while others are too hard, hence difficult to eat. Moreover, such snack foods may be readily broken during carrying and this is unfavorable from the product appearance viewpoint.

Under these circumstances, the present inventors made intensive investigations in an attempt to make improvements in quality features, such as texture and appearance, of certain snack foods, namely snack foods produced by using fruits or vegetables as raw materials and, as a result, found that shaped foods obtained by mixing a curdlan to small pieces of a fruit or vegetable for binding said small pieces have good quality features as snack foods. Further investigations based on this finding have now led to completion of the present invention.

Thus, the invention provides 1) a shaped food produced from small pieces of a fruit or vegetable by shaping and binding with a curdlan, and 2) a method of producing shaped foods which comprises mixing curdlan with small pieces of a fruit or vegetable, shaping the mixture and heating the shaped material for binding said small pieces.

The "curdlan" is a general name of thermo-gelable β-1,3-glucan-type polysaccharides which are produced by microorganisms such as strains of the genus Alcaligenes or Agrobacterium. Thus, more specifically, the curdlan produced by Alcaligenes faecalis var. myxogenes 10C3K [Agricultural and Biological Chemistry, vol. 30, page 196 (1966)], the curdlan produced by the mutant NTK-u (IFO 13140) of Alcaligenes faecalis var. myxogenes 10C3K (Japanese Patent Publication No. 32673/1973 and U.S. Patent 3,822,250) and the curdlan produced by Agrobacterium radiobacter sp. (IFO 13127) and its mutant U-19 (IFO 13126) (Japanese Patent Publication No. 32674/1973 and U.S. Patent 3,822,250), for instance, are usable. When cultivated in the conventional manner, generally under aerobic conditions, using, as nutrient sources, carbon sources, nitrogen sources, inorganics and so forth, such microorganisms produce a curdlan usable in the practice of the invention. The thus-produced curdlan can be recovered from the cultures generally by appropriately utilizing such means as dissolution, filtration, neutralization, washing with water, dehydration and drying. For instance, a culture broth containing a curdlan usable in the practice of the invention is supplemented with an alkali, such as an aqueous sodium hydroxide solution, the mixture is stirred to an extent sufficient for dissolution and then subjected to such treatment as centrifugation or filter press filtration using a filter aid, the thus-obtained clear and transparent filtrate is neutralized with an acid, such as hydrochloric acid, sulfuric acid or acetic acid, and the resulting gel-like precipitate is collected by centrifugation, washed with water and spray-dried to give the curdlan as a white or off-white powder.

Generally, the fruit or vegetable to be used in the practice of the invention is not limited to any particular species provided that it is an edible one obtainable in the form of small pieces or processed into the form of small pieces. The term "small pieces" means that each small piece has dimensions within the ranges of, for example, 1-30 mm in thickness, 2-30 mm in width and 1-100 mm in length. When the fruit or vegetable is produced in the natural form of such small pieces, said fruit or vegetable can be used as such. Generally, however, a natural product is cut in advance to such dimensions. The fruit or vegetable is not limited to any particular species. Typical examples are such fruits as mandarin orange, navel orange, hassaku orange, other citrus fruits, apricot, plum, persimmon, cherry, apple, strawberry and grape, and such vegetables as velvet shank, shiitake mushroom, nameko mushroom, champignon, other mushrooms, carrot, Japanese pumpkin, tomato, celery, lettuce, asparagus, other vegetables rich in color, potato, sweet potato, like edible tubers, bracken, bamboo shoot, udo and other edible wild plants. The raw material fruit or vegetable is generally used in a cooked form as necessary. In some cases, however, it is also possible to use said material in the raw form for processing it into shapings by the method of the invention and then cook the shapings obtained. The cooking itself may be effected in the conventional manner, for example by boiling, steaming, baking or microwave oven heating.

In accordance with the invention, the small pieces of a fruit or vegetable are shaped and bound by mixing said small pieces with a curdlan in the presence of water, shaping the mixture as desired, and heating. The curdlan is added generally in the form of a dispersion in water, a liquid seasoning or the like aqueous medium. When water is present on the surface of small pieces in an amount sufficient to wet and moisten the curdlan it may be added in the form of a powder. In each case, the curdlan should preferably be present in the form of an aqueous mixture containing about 1-23% by weight on the surface of small pieces of fruit or vegetable. The curdlan is used in an amount suitably selected depending on the fruit or vegetable material to which it is added, generally in an amount of 0.1-25% by weight, preferably in an amount of 0.2-10% by weight, more preferably in an amount of 1-6% by weight,based on the final product. For this purpose, usually about 10-100 parts by weight of said aqueous dispersion of curdlan is mixed with 100 parts by weight of small pieces of fruit or vegetable. When the addition level is lower than the above range, the product food has poor integrity of small pieces and can be readily broken. When the addition level is higher than said range, the processability is poor in most cases. By adjusting this addition level, it is possible to adjust, as desired, the hardness or consistency of the desired product as well as the ease with which the small pieces get unbound.

After admixture such that a curdlan is distributed on the surface of the small pieces of fruit or vegetable as uniformly as possible, the mixture is shaped. In this case, any shape which seem appropriate for the final product to serve as a snack food may be selected. The shape is preferable in a thickness of about 0.5 - 60 mm. Thus, for instance, the shape may be card-like, sheet- or plate-like, bar- or rod-like, cylindrical triangular, cubic or spherical, but is not limited to thereto. For this shaping, it is advantageous, from the operation viewpoint, to prepare a mold having the desired shape and size and fill the above mixture into said mold. Alternatively, it is also possible to shape the mixture into an intermediate product and, after the heat treatment to be mentioned later herein, cut the intermediate product to a desired shape and size. For instance, the method comprising shaping the mixture once into broad plates, heating the plates for binding said small pieces and then cutting the plates to a desired size and shape may be employed.

The shapings are then heated for binding said small pieces. This heating may be made by an appropriate method, such as direct heating, water bath heating, oil bath heating or heating under pressure, in a manner such that the shapings can be heated to a temperature above about 55°C, preferably above 70°C, more preferably above 80°C, whereby the binding of said small pieces proceeds by the intermediary of the curdlan. The heating time should suitably be selected depending on the size of the shapings. Usually, the preferable heating time is about 0.5 - 30 minutes. In this way, the small pieces are bound together by the binding action of the curdlan to give the shaped food according to the invention with a certain given shape and size.

The shaped food according to the invention may serve as a snack food either as such or in combination with one or more other food materials. For instance, the shapings obtained by binding and shaping into plates may serve as a kind of snack food for easy eating or may be used in preparing sandwich by inserting said plate-like shaping between two slices of bread, for instance.

The shaped food according to the invention is characterized in that it has a certain desired shape and size with small pieces of a fruit or vegetable being bound together by means of a curdlan. Since the binding among said small pieces is proper and adequate, the shaped food is not deformed or broken when conveyed or when taken up by the hand for eating. Furthermore, it retains the taste and flavor of the fruit or vegetable satisfactorily and can be suited as a snack food or a material therefor. Such particular effects can be produced by the use of a curdlan; such effects can never be produced by the use of other polysaccharides, for example starch.

The following examples illustrate the invention in further detail. A spray-dried powder of the curdlan produced by the mutant NTK-u (IFO 13140) of Alcaligenes faecalis var. myxogenes 10C3K.

Example 1

A uniform mixture of 500 g of tomato cut into cubes each side of which was about 5 mm and 30 g of the curdlan was prepared. After addition of 200 ml of boiled water, the mixture was stirred and filled into a heat-resistant plastic film tube having a lay flat width of 10 cm. The tube was then sealed. The whole was immersed in boiling water and heated for 30 minutes and then cooled with running water. Thus was obtained a shaped food with the small pieces of tomato being bound by means of the curdlan. An about 5-mm-thick slice of this tomato shaping could be used as an insert ingredient of sandwich. When it was sandwiched between two slices of bread, the small pieces of tomato would not be separated from one another but remained the original shape satisfactorily. When bitten in the mouth, the shaping showed its good texture with the small pieces unbound to an adequate extent.

Example 2

In the procedure of Example 1, the quantity of tomato was decreased to 300 g and, instead, 50 g of carrot cut into cubes each side of which was about 5 mm, 100 g of small pieces of pineapple (cubic, each side about 5 mm) and 50 g of boiled green peas were admixed, and a shaping was produced in the same manner as in Example 1. This shaping was colorful and, in a slice thereof, small pieces of the fruit and vegetables used were found bound to a proper extent. When sandwiched between two slices of bread, the slice retained its good shape without disintegration of the small pieces. When eaten, this sandwich was found to have retained the texture each of the fruit and vegetables used as the materials to a satisfactory extent and, when it was bitten in the moutn, the small pieces were unbound properly, whereby good feeling was obtained in eating it.

Example 3

A uniform mixture of the whole contents of a mandarin orange can [185 g of segments (average dimentions: 1 cm in thickness, 2 cm in width and 3 cm in length) and 130 g of syrup (15 BX)] and 6 g of the curdlan was prepared and filled into a heat resistant plastic tube having a lay flat width of 10 cm, and the tube was then sealed. Thereafter, the procedure of Example 1 was followed to give a shaped food with sections of mandarin orange being bound and shaped by means of the curdlan.

## Claims

1. A shaped food, which comprises shaping and binding small pieces of fruit or vegetable with a curdlan.

2. The shaped food according to claim 1, wherein the small pieces have dimensions of 1 to 30 mm in a thickness, 2 to 30 mm in a width and 1 to 100 mm in a length.

3. The shaped food according to claim 1, wherein the curdlan is contained in an amount of 1 to 5% by weight, based on the final product.

4. A method of producing shaped foods, which comprises mixing a curdlan with small pieces of fruit or vegetable, shaping the mixture and heating the shaped material for binding said small pieces.

5. The method according to claim 4, wherein the curdlan is mixed in an amount of 1 to 5% by weight, based on the final product.

6. The method according to claim 4, wherein the curdlan is present in the form of an aqueous mixture containing about 1 to 23% by weight on the surface of said small pieces.

7. The method according to claim 4, wherein the mixture is shaped into a size having a thickness of about 0.5 to 60 mm.

8. The method according to claim 4, wherein the shaped material is heated above about 55°C.